# EUROPEAN PATENT SPECIFICATION

(11) **EP 2 041 884 B1**
(45) Date of publication and mention of the grant of the patent: **23.02.2011**
(21) Application number: 07733448.0
(22) Date of filing: 03.07.2007
(51) Int. Cl.: H04B 3/56

(54) **POWER LINE COMMUNICATION SYSTEM**
STROMLEITUNGS-KOMMUNIKATIONSSYSTEM
SYSTÈME DE COMMUNICATION DE LIGNE ÉLECTRIQUE

(30) Priority: 08.07.2006 GB 0613623
(43) Date of publication of application: 01.04.2009
(73) Proprietor: Vetco Gray Controls Limited, Bristol BS48 1BS (GB)
(72) Inventor: ROBINSON, Gerald, Ian, Bristol BS20 8PU (GB)
(74) Representative: Emerson, Peter James
(86) International application number: PCT/GB2007/002482
(87) International publication number: WO 2008/007051

(56) References cited:
- EP-A1- 0 463 341
- WO-A-2004/028064
- US-A- 4 173 714

## Description

This invention relates to communications and power transmission apparatus for transmitting both communications signals and electrical power from a source to a location remote from the source and a hydrocarbon production installation utilizing such apparatus.

Control of an offshore fluid extraction well is typically effected from the shore or from an offshore platform via an umbilical. The umbilical typically carries hydraulic and electrical power, and communication for control and monitoring of the well. Modern systems use fibre optic communication channels which provide high quality and high data rates. Currently, since the use of fibre optic communications does not yet have a history of long term reliability, well operators demand a back up wire communications system, be it at a lower data rate. In order to simplify the umbilical and reduce its costs, the control communication is typically achieved by superimposing the control data on the power wires at the source and extracting it at the well i.e. Communications on Power (COP). Although this technique has been made to work successfully, in the case of long umbilical lengths, e.g. 120 Km, there are technical problems with the conventional approach. They are:-
a) Because of the long umbilical length (e.g. 120 Km) and in order to keep cable costs down, the cable transmits power at high voltage and low current. The major problem in designing COP systems, which typically use frequency division multiplexing, is keeping the power out of the communications. Filters which reject the fundamental frequency are easy to design since they can be part of the signal filter. However, the power channel can also generate harmonics and some of them will be in the communications band, so the signal filter cannot remove them without removing the signal as well. Thus they must be removed by power filters.
b) Because of the length of the cable, its attenuation is very large at high frequencies, typically greater than 70 dB. As a result, signalling frequencies are quite low, typically below 10 kHz. The consequence of this is that separation between power and communications frequencies is small, and multiplexing filters have to develop sufficient attenuation over a shorter frequency range. Power filters have to be designed with a low cut-off frequency and this, coupled with the high voltages involved, means large values and bulky components.
c) Filters which remove communications band harmonics from the power source (and load) exhibit a frequency response which varies with load impedance. In particular, a heavy load will naturally depress the output, even in theoretical, lossless filters. This degrades the voltage regulation of the system, reducing its ability to deliver power.

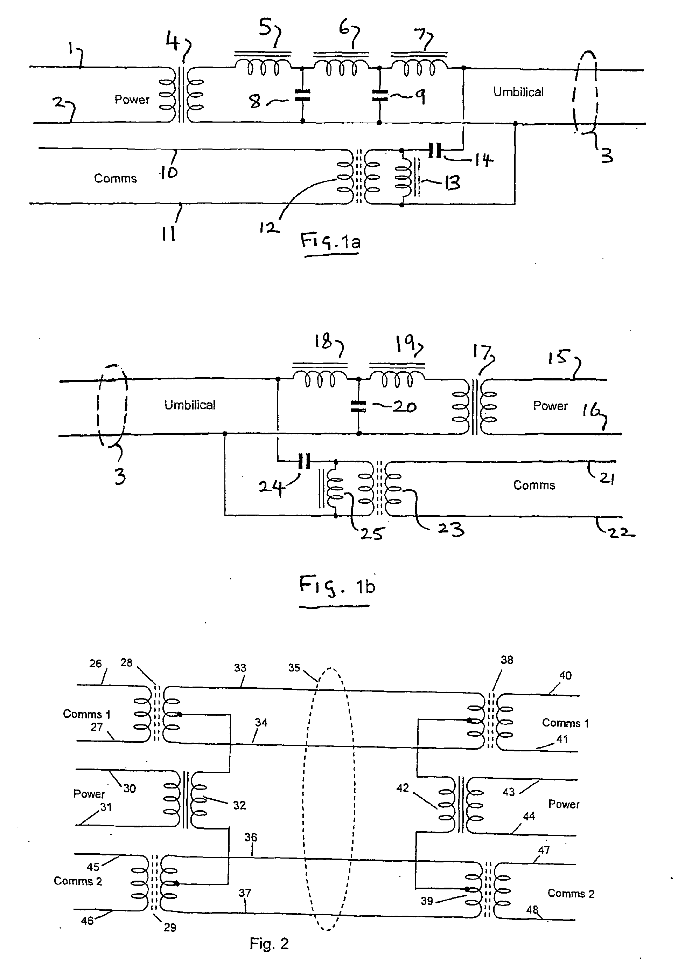

Figs. 1a and 1b show how a conventional COP system can be implemented. Fig. 1a shows how a communications signal is added to the power at the source end of an umbilical (i.e. the combiner) and Fig. 1b how the communications signal is extracted at the well end (i.e. the splitter).

More particularly, referring to Fig. 1a, power on lines 1, 2 at a shore-based installation or an offshore platform is supplied to an umbilical 3 via a transformer 4 and a power filter. The power filter comprises three series-connected inductors 5, 6 and 7 and two parallel-connected capacitors 8 and 9. Also at the shore-based installation or offshore platform, a communications signal on lines 10, 11 comprising control data is applied to umbilical 3 via a transformer 12 and a communications filter. The communications filter comprises a parallel-connected inductor 13 and a series-connected capacitor 14. Referring to Fig. 1b, at the well, power is supplied from the umbilical 3 to lines 15,16 via a power filter and a transformer 17. The power filter comprises two series-connected inductors 18 and 19 and a parallel-connected capacitor 20 and the communications signal is supplied to lines 21, 22 and via a transformer 23 and a communications filter. The communications filter comprises a series-connected capacitor 24 and a parallel-connected inductor 25.

The power filter components shown in Figs. 1a and 1b must be designed to cope with the voltages and currents associated with the power circuits. Furthermore, their cut-off frequencies could well be as low as 100 Hz which means, typically, 3 µF capacitors rated at 3 kV and 0.8 H inductors designed to carry 10 A. These are large components and the capacitors are difficult to source. The communications filter inductors are smaller but the capacitors are at least 1 µF and need to be rated at the full high voltage.

It is an aim of the present invention to provide means for enabling transmission of broth communications signals and power from a source, such as a surface station of a hydrocarbon production installation, to a remote location, such as an underwater hydrocarbon extraction facility, whilst mitigating the problems identified above.

US-A-4 173 714 discloses a communication circuit in which data information flow between a control unit and a terminal and power feed from the control unit to the terminal is accomplished via a phantom pair circuit arrangement in which the control unit circuitry is connected to the two centre taps of the secondary windings of transformers terminating two pairs of conductors at the control unit. Connections to the centre taps of the primary windings of transformers terminating the two conductor pairs at the terminal complete the phantom pair circuit. A d.c. voltage source is connected at the control unit to the phantom pair circuit arrangement. The d.c. voltage is applied to the phantom circuit arrangement, and is sensed and regulated by a voltage regulator in the terminal connected in series at the terminal end of the phantom pair.

In accordance with the present invention there is provided apparatus as set out in the accompanying claims.

The invention will now be described with respect to the accompanying drawing, in which:
Fig. 1a shows a known transmitting arrangement;
Fig. 1b shows the receiving end of the above arrangement; and
Fig. 2 shows a circuit diagram of an embodiment in accordance with the present invention.

Fig. 2 shows an embodiment of the present invention. At a surface-based station, e.g. shore-based or at an offshore platform, communications signals on lines 26, 27 and on lines 45, 46 for a subsea well or wells are supplied to the primary windings of each of two communications input transformers 28 and 29 respectively and power on lines 30 and 31 is supplied to the primary winding of a power input transformer 32. The secondary winding of transformer 28 is connected across a pair of wires 33, 34 in an umbilical cable 35 and the secondary winding of transformer 29 is connected across a second pair of wires 36, 37 in the umbilical cable 35. Thus the communications signal is split into two halves, each half being carried by a respective one of the pairs 33, 34 and 36, 37, these pairs being galvanically isolated from each other.

One end of the secondary winding of transformer 32 is connected to a centre tap of the secondary winding of transformer 28, the other end of the secondary winding of transformer 32 being connected to a centre tap of the secondary winding of transformer 29.

At an underwater hydrocarbon extraction facility, e.g. a subsea well or well complex, the primary winding of a communications output transformer 38 Is connected across the pair of wires 33, 34, the primary winding of a communications output transformer 39 being connected across the pair of wires 36, 37. The secondary windings of transformers 38, 39 are connected across lines 40, 41 and 47, 48 respectively to provide two communications channels for the facility. Also at the facility, one end of the primary winding of a power output transformer 42 is connected to a centre tap of the primary winding of transformer 38, the other end of the primary winding of transformer 42 being connected to a centre tap of the primary winding of transformer 39. The secondary winding of transformer 42 is connected across lines 43, 44 to provide power to the facility.

In a conventional COP system, the power and communications are carried on a single pair whilst the example of the present invention requires two pairs. However, power is carried on both pairs so either twice as much power can be carried, for the same wire size in the umbilical, or the four wires can be smaller. Communication over very long distances can generally only be accomplished at low data rates. This causes great difficulty for conventional COP systems because as the difference between communications and power frequencies becomes smaller, separating communications signal from power becomes increasingly difficult. The system according to the present invention requires much simpler filtering because of the inherent isolation between the power and communications channels. Furthermore, two communications channels are provided. Typically the system supplies communications signals to a well complex rather than one well, so in practice, to increase the rate at which well data is collected and control commands issued, communications signals might be supplied for example to four wells via one pair of wires and to another four via the other pair. Thus, data rates can be halved without affecting field data update rates, to extend the distance over which communications can be achieved.

If the centre taps of each of the transformers 28, 29, 38 and 39 are perfect so that crosstalk between the pairs is zero, then there is complete isolation between the power and the communications signal circuits. In practice, isolation will not be total but will, typically, be around 50 dB. Again, in practice some filtering will be needed but the problem will be at least two orders of magnitude less difficult than for conventional COP systems.

In the system of Fig. 2, the communications signal is split into two halves and each half is carried by one of two wire pairs. The two pairs are galvanically isolated from each other. The power is carried via a "phantom channel" as a common mode signal on each of the two communications pairs.

This invention eliminates the need for expensive, high voltage and bulky components and at the same time the new technique provides excellent common mode rejection, which, in tests, has demonstrated an isolation between power and signal of 80 dB or better. In practice 50 dB of isolation is expected.

As well as sending a communications signal to the hydrocarbon extraction facility, signals from the latter (e.g. from monitoring of the well) may be sent via the same path to the surface-based station and in that respect the communication could operate in a simplex mode, a duplex mode or in a semi-duplex mode (with communication in the two directions alternating with each other).

The foregoing description relates to an embodiment of the present invention only. It will be apparent to those skilled in the art that various modifications or alternatives are possible within the scope of the claims.

## Claims

1. Communications and power transmission apparatus for transmitting both communications signals and electrical power from a source to a location remote from the source, comprising, at the source:
a communications signal input (26, 27; 45, 46) connected to first and second communications input transformers (28, 29) for feeding communications signals to respective primary windings of said first and second communications input transformers; and
a power input (30, 31);
and, at the remote location:
a communications signal output (40, 41; 47, 48) connected to respective secondary windings of first and second communications output transformers (38, 39); and
a power output (43, 44);
wherein:
the secondary windings of the first and second communications input transformers are respectively connected to the primary windings of the first and second communications output transformers to form first and second galvanically-isolated circuits; and
the power input is connected between centre-taps of the secondary windings of the first and second communications Input transformers, and the power output is connected between centre-taps of the primary windings of the first and second communications output transformers.

2. Apparatus according to claim 1, wherein the power input (30, 31) is connected to a primary winding of a power input transformer (32), a secondary winding of the power Input transformer being connected between the centre-taps of the primary windings of the first and second communications input transformers (28, 29).

3. Apparatus according to claim 1 or 2, wherein the power output (43, 44) is connected to a secondary winding of a power output transformer (42), a primary winding of the power output transformer being connected between the centre-taps of the primary windings of the first and second communications output transformers (38, 39).

4. A hydrocarbon production installation comprising apparatus according to any preceding claim, wherein the source is at a surface station, and the remote location is an underwater hydrocarbon extraction facility, the surface station and extraction facility being electrically linked via an umbilical cable (35).

5. A hydrocarbon production installation according to claim 4, wherein the first and second galvanically-isolated circuits are substantially located within the umbilical cable (35).

## Patentansprüche

1. Kommunikations- und Leistungsübertragungsvorrichtung zum Übertragen von Kommunikationssignalen und elektrischer Leistung von einer Quelle zu einem von der Quelle entfernten Ort, die an der Quelle Folgendes umfasst:
einen Kommunikationssignaleingang (26, 27; 45, 46), der mit einem ersten und einem zweiten Kommunikationseingangstransformator (28, 29) verbunden ist, um Kommunikationssignale in jeweilige Primärwicklungen des genannten ersten und des genannten zweiten Kommunikationseingangstransformators einzuspeisen; und
einen Leistungseingang (30, 31);
und am entfernten Ort Folgendes umfasst:
einen Kommunikationssignalausgang (40, 41; 47, 48), der mit jeweiligen Sekundärwicklungen des ersten und des zweiten Kommunikationsausgangstransformators (38,39) verbunden ist; und
einen Leistungsausgang (43,44);
wobei:
die Sekundärwicklungen des ersten und des zweiten Kommunikationseingangstransformators jeweils mit den Primärwicklungen des ersten bzw. des zweiten Kommunikationsausgangstransformators verbunden sind, um einen ersten und einen zweiten galvanisch getrennten Stromkreis zu bilden; und
der Leistungseingang zwischen Mittelabgriffen der Sekundärwicklungen des ersten und des zweiten Kommunikationseingangstransformators angeschlossen ist und der Leistungsausgang zwischen Mittelabgriffen der Primärwicklungen des ersten und des zweiten Kommunikationsausgangstransformators angeschlossen ist.

2. Vorrichtung nach Anspruch 1, wobei der Leistungseingang (30, 31) mit einer Primärwicklung eines Leistungseingangstransformators (32) verbunden ist, wobei eine Sekundärwicklung des Leistungseingangstransformators zwischen den Mittelabgriffen der Primärwicklungen des ersten und des zweiten Kommunikationseingangstransformators (28, 29) angeschlossen ist.

3. Vorrichtung nach Anspruch 1 oder 2, wobei der Leistungsausgang (43, 44) mit einer Sekundärwicklung eines Leistungsausgangstransformators (42) verbunden ist, wobei eine Primärwicklung des Leistungsausgangstransformators zwischen den Mittelabgriffen der Primärwicklungen des ersten und des zweiten Kommunikationsausgangstransformators (38, 39) angeschlossen ist.

4. Kohlenwasserstoff-Förderanlage, umfassend eine Vorrichtung nach einem der vorangehenden Ansprüche, wobei sich die Quelle an einer Oberflächenstation befindet und es sich bei dem entfernten Ort um eine Unterwasser-Kohlenwasserstoff-Gewinnungseinrichtung handelt, wobei die Oberflächenstation und die Gewinnungseinrichtung über ein Versorgungskabel (35) elektrisch verbunden sind.

5. Kohlenwasserstoff-Förderanlage nach Anspruch 4, wobei sich der erste und der zweite galvanisch getrennte Stromkreis im Wesentlichen im Versorgungskabel (35) befinden.

## Revendications

1. Appareil de communication et de transmission d'énergie pour transmettre à la fois des signaux de communication et de l'énergie électrique depuis une source jusqu'à un emplacement à distance de la source, comportant, à la source :
une entrée de signaux de communication (26, 27 ; 45, 46) connectée à un premier et un deuxième transformateurs d'entrée de communication (28, 29) pour alimenter des signaux de communication aux enroulements primaires respectifs desdits premier et deuxième transformateurs d'entrée de communication; et
une entrée d'énergie (30, 31) ;
et, à l'emplacement à distance :
une sortie de signaux de communication (40, 41 ; 47, 48) connectée aux enroulements secondaires respectifs des premier et deuxième transformateurs de sortie de communication (38, 39) ; et
une sortie d'énergie (43, 44) ;
dans lequel :
les enroulements secondaires des premier et deuxième transformateurs d'entrée de communication sont connectés respectivement aux enroulements primaires des premier et deuxième transformateurs de sortie de communication pour former un premier et un deuxième circuit isolé galvaniquement ; et
l'entrée d'énergie est connectée entre les prises centrales des enroulements secondaires des premier et deuxième transformateurs d'entrée de communication, et la sortie d'énergie est connectée entre les prises centrales des enroulements primaires des premier et deuxième transformateurs de sortie de communication.

2. Appareil selon la revendication 1, dans lequel l'entrée d'énergie (30, 31) est connectée à un enroulement primaire d'un transformateur d'entrée d'énergie (32), un enroulement secondaire du transformateur d'entrée d'énergie étant connecté entre les prises centrales des enroulements primaires des premier et deuxième transformateurs d'entrée de communication (28, 29).

3. Appareil selon la revendication 1 ou 2, dans lequel la sortie d'énergie (43, 44) est connectée à un enroulement secondaire d'un transformateur de sortie d'énergie (42), un enroulement primaire du transformateur de sortie d'énergie étant connecté entre les prises centrales des enroulements primaires des premier et deuxième transformateurs de sortie de communication (38, 39).

4. Installation de production d'hydrocarbures comportant un appareil selon l'une quelconque des revendications précédentes, dans laquelle la source est située à une station en surface, et l'emplacement à distance est une installation d'extraction d'hydrocarbures sous l'eau, la station en surface et l'installation d'extraction étant reliées électriquement par l'intermédiaire d'un câble ombilical (35).

5. Installation de production d'hydrocarbures selon la revendication 4, dans laquelle les premier et deuxième circuits isolés galvaniquement sont sensiblement situés dans le câble ombilical (35).
